# EUROPÄISCHE PATENTSCHRIFT

(11) **EP 0 720 550 B1**
(45) Veröffentlichungstag und Bekanntmachung des Hinweises auf die Patenterteilung: **09.07.1997**
(21) Anmeldenummer: 94926789.2
(22) Anmeldetag: 17.09.1994
(51) Int. Cl.: B60T 8/36, B60T 8/50, F16K 31/06, G05D 16/20

(54) **ELEKTROMAGNETISCH BETÄTIGTES VENTIL, INSBESONDERE FÜR SCHLUPFGEREGELTE HYDRAULISCHE BREMSANLAGEN IN KRAFTFAHRZEUGEN**
ELECTROMAGNETICALLY ACTUATED VALVE, ESPECIALLY FOR HYDRAULIC ANTISKID BRAKING SYSTEMS IN MOTOR VEHICLES
VANNE ELECTROMAGNETIQUE, NOTAMMENT POUR SYSTEMES DE FREINAGE HYDRAULIQUE ANTIPATINAGE POUR AUTOMOBILES

(30) Priorität: 23.09.1993 DE 4332368
(43) Veröffentlichungstag der Anmeldung: 10.07.1996
(73) Patentinhaber: ROBERT BOSCH GMBH, 70442 Stuttgart (DE)
(72) Erfinder: MUELLER, Klaus, D-71732 Tamm (DE); HEUGLE, Bernhard, D-71723 Grossbottwar (DE); HERZOG, Kurt, D-74321 Bietigheim-Bissingen (DE); OEHLER, Martin, D-74211 Leingarten (DE); HOHL, Günther, D-70569 Stuttgart (DE); HERDERICH, Hans-Jürgen, D-71394 Kernen (DE)
(86) Internationale Anmeldenummer: DE9401076
(87) Internationale Veröffentlichungsnummer: WO9508461

(56) Entgegenhaltungen:
- EP-A- 0 317 305
- DE-A- 3 607 693
- DE-A- 3 802 648
- DE-A- 4 035 817
- DE-C- 3 934 771
- GB-A- 2 185 299

## Beschreibung

### Stand der Technik

Die Erfindung geht aus von einem elektromagnetisch betätigten Ventil, insbesondere für schlupfgeregelte hydraulische Bremsanlagen in Kraftfahrzeugen, nach der Gattung des Hauptanspruchs.

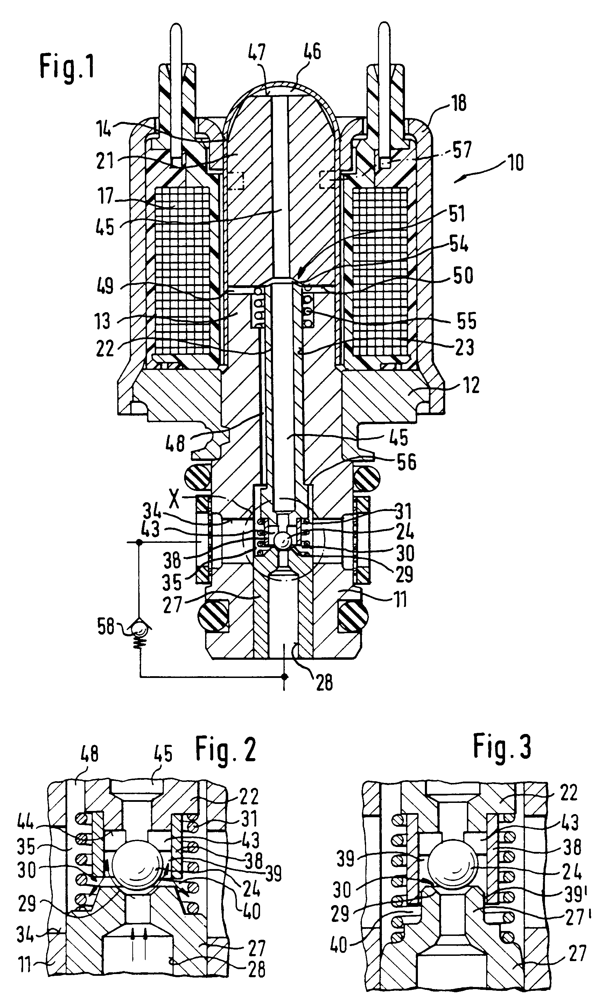

Ein solches Ventil ist durch DE 39 34 711 C1, Figur 3 bekannt. Es weist einen im Ventildom angeordneten, einen Anschlag für den Magnetanker bildenden Steuerkolben auf, der auf einem vom Ventilkörper ausgehenden, den Magnetanker durchdringenden Zapfen längsverschiebbar geführt ist. Der Steuerkolben begrenzt mit seinem ankerabgewandten Boden eine Steuerkammer, welche durch einen den Zapfen und den Steuerkolben gleichachsig durchdringenden Druckmittelkanal mit dem Druckmitteleinlaß des bekannten Ventils in Verbindung steht. Während der Magnetanker an beiden Stirnseiten druckausgeglichen ist, vermag in die Steuerkammer eingesteuerter Druck den Steuerkolben gegen einen Anschlag axial zu verschieben. Hierdurch verringert sich der Hub des Magnetankers um ein vorbestimmtes Maß, was eine Drosselung des Durchflußquerschnitts zur Folge hat.

Diese Wirkungsweise des bekannten Ventils ist nutzbar in schlupfgeregelten hydraulischen Bremsanlagen, bei denen der Druckmitteleinlaß mit dem Hauptbremszylinder und der Druckmittelauslaß mit einem Radbremszylinder in Verbindung stehen. Wird z.B. bei einer Bremsschlupfregelung das Ventil durch Erregen der Magnetspule in seine Schließstellung geschaltet und beim Vermindern des Druckes im Radbremszylinder ein Druckgefälle ausreichender Höhe zwischen dem Druckmitteleinlaß und dem Druckmittelauslaß erzeugt, so bewirkt dies das vorstehend beschriebene Verschieben des Steuerkolbens mit der Folge, daß beim Öffnen des Ventils die erwähnte Drosselung des Durchflußquerschnittes wirksam wird, solange der Druckunterschied zwischen Einlaß und Auslaß besteht. Die Minderung des Durchflußquerschnittes wirkt sich wegen des verringerten Druckgradienten beim auf einen Druckabbau folgenden Druckaufbau einer Bremsschlupfregelung günstig auf die Regelgüte und das Geräuschverhalten der Bremsanlage aus. Bei einer normalen Bremsung ohne Blockiergefahr steht dagegen der volle Durchflußquerschnitt des Ventils zur Verfügung, was eine angestrebte kurze Ansprechzeit der Bremsanlage bei Bremsbetätigung fördert.

Bei dem bekannten Ventil ist jedoch die Festeinstellung des gedrosselten Durchflußquerschnittes nachteilig, weil hierdurch die Durchflußmenge differenzdruckabhängigen Schwankungen unterworfen ist. Außerdem ist die Durchflußmenge ganz wesentlich von dem Absolutmaß des Durchflußquerschnitts abhängig, d.h. der Anschlag bedarf einer sehr engen Tolerierung. Ferner ist das Ventil aufgrund des benötigten Steuerkolbens relativ kostenaufwendig.

### Vorteile der Erfindung

Das erfindungsgemäße Ventil mit den kennzeichnenden Merkmalen des Hauptanspruchs hat demgegenüber den Vorteil, daß sich der Durchflußquerschnitt des ersten Sitzventils bei geschlossenem zweiten Sitzventil in Abhängigkeit von den am Anker wirkenden Kräften, jedoch ohne Magnetkraft, bei ausreichend großem Druckgefälle zwischen Einlaß- und Auslaßseite des Ventils selbsttätig auf weitgehend konstante, gegenüber der vollen Öffnung des ersten Sitzventils geringere Durchflußmengen einstellt. Der bauliche Aufwand zur Erzielung dieser Funktionsweise des erfindungsgemäßen Ventils als Stromregelventil ist gering.

Durch die in den Unteransprüchen aufgeführten Maßnahmen sind vorteilhafte Weiterbildungen und Verbesserungen des im Hauptanspruch angegebenen Ventils möglich.

Besonders vorteilhaft hinsichtlich Kosten und Funktionssicherheit ist die Ausgestaltung des zweiten Ventils an den ohnehin erforderlichen Bauteilen.

Von Vorteil ist außerdem die abgedichtete Führung des Magnetankers im Ventildom, weil hierdurch auf einfache Weise eine druckmäßige Trennung der beiden Ankerstirnseiten für die Erzeugung einer Kraftwirkung auf den Magnetanker geschaffen ist.

Darüber hinaus zeichnet sich in vorteilhafter Weise die Führung des Druckmittelstrahls in den von dem Leitkörper umgrenzten Raum aus, weil der hiermit erzeugte Staudruck das am Magnetanker wirkende Druckgefälle verstärkt.

### Zeichnung

Ein Ausführungsbeispiel der Erfindung ist in der Zeichnung vereinfacht dargestellt und in der nachfolgenden Beschreibung näher erläutert. Es zeigen Figur 1 einen Längsschnitt durch ein elektromagnetisch betätigtes Ventil, Figur 2 und 3 Varianten der in Figur 1 mit X gekennzeichneten Einzelheit im Bereich eines Sitzventiles, in abweichendem Maßstab.

### Beschreibung des Ausführungsbeispieles

Ein elektromagnetisch betätigtes Ventil 10 weist ein zur Aufnahme in einem nicht dargestellten Ventilblock bestimmtes Ventilgehäuse 11 auf, welches mit einer Jochscheibe 12 fest verbunden ist (Fig. 1). Das Ventilgehäuse 11 ist über die Jochscheibe 12 hinaus mit einem Polkern 13 fortgesetzt. Auf den Polkern 13 ist ein rohrförmiger Ventildom 14 aufgesteckt. Er ist durch Schweißung mit dem Polkern 13 dicht verbunden. Polkernabgewandt besitzt der Ventildom 14 einen halbkugelförmigen Abschluß.

Der Ventildom 14 ist von einer ringförmigen Magnetspule 17 umgriffen. Ein glockenförmiges Gehäuse 18 umschließt die Magnetspule 17. Das Gehäuse 18 greift einerseits am Ventildom 14 an; andererseits ist es mit der Jochscheibe 12 verbunden.

Im spulenseitig geschlossenen Ventildom 14 ist ein im wesentlichen kreiszylindrischer Magnetanker 21 längsbewegbar aufgenommen. Vom Magnetanker 21 geht ein Ventilstößel 22 aus. Er ist ein vom Magnetanker 21 getrenntes Bauteil. Der Ventilstößel 22 ist in einer Längsbohrung 23 des Ventilgehäuses 11 mit Spiel aufgenommen. An seinem ankerabgewandten Ende trägt der Ventilstößel 22 ein kugelförmig ausgebildetes Schließglied 24. Das im Ausführungsbeispiel als Vollkugel ausgestaltete Schließglied 24 ist mit dem Ventilstößel 22 stoffschlüssig verbunden. Abweichend vom Ausführungsbeispiel kann das Schließglied 24 ankerabgewandt auch die Gestalt einer Halbkugel oder eines Kegels bzw. Kugelstumpfs besitzen.

In den ankerabgewandten Abschnitt der Längsbohrung 23 ist ein hülsenförmiger Ventilkörper 27 mit einer Stufenbohrung 28 eingepreßt, welche in einen Ventilsitz 29 mündet. Der Ventilsitz 29 ist als kegelförmige Ansenkung mit einem Kegelwinkel von vorzugsweise 90° ausgebildet. Das Schließglied 24 und der Ventilsitz 29 bilden ein erstes Sitzventil 30 des elektromagnetisch betätigten Ventiles 10. Bei nicht erregter Magnetspule 17 nimmt das erste Sitzventil 30 aufgrund der Wirkung einer einerseits am Ventilstößel 22 und andererseits am Ventilkörper 27 angreifenden, vorgespannten ersten Rückstellfeder 31 seine Offenstellung als Ruhestellung ein.

Das Ventilgehäuse 11 ist mit einer rechtwinklig die Längsbohrung 23 kreuzenden Querbohrung 34 versehen. Im Durchdringungsbereich beider Bohrungen 23 und 34 ist eine das erste Sitzventil 30 aufnehmende Ventilkammer 35 geschaffen. Die Ventilkammer 35 steht einerseits über den Ventilsitz 29 und die Stufenbohrung 28 mit einem Druckmitteleinlaß in Verbindung; andererseits ist ein von der Querbohrung 34 gebildeter Druckmittelauslaß an die Ventilkammer angeschlossen.

In der Ventilkammer 35 befindet sich außer dem ersten Sitzventil 30 und der Rückstellfeder 31 auch ein Leitkörper 38 für Druckmittel (Fig. 2). Der Leitkörper 38 ist hülsenförmig ausgebildet und gleichachsig zum Ventilstößel 22 verlaufend an diesem befestigt. Der Leitkörper 38 umgreift das Schließglied 24 des ersten Sitzventils 30 unter Bildung eines Radialspaltes 39 und erstreckt sich unter Bildung eines Axialspaltes 40 bis nahe an den Ventilkörper 27, wie dies deutlich aus Figur 2 ersichtlich ist. Der Axialspalt 40 besitzt in der Ruhestellung des Ventils 10 ein gegenüber dem Ventilhub größeres Maß, d.h. in der die Arbeitsstellung des Ventils 10 bildenden Schließstellung des ersten Sitzventils 30, in welcher das Schließglied 24 am Ventilsitz 29 angreift, ist der Axialspalt 40 auf ein Mindestmaß verkleinert.

Der Leitkörper 38 trennt von der Ventilkammer 35 eine Teilkammer 43 ab. Diese Ventilteilkammer 43 steht durch einen ventilsitzabgewandt gelegenen Querschlitz 44 des Ventilstößels 22 mit einem als durchgehende, gleichachsige Längsbohrung im Ventilstößel und im Magnetanker 21 ausgebildeten ersten Druckmittelkanal 45 in Verbindung. Der erste Druckmittelkanal 45 führt zu einer ersten Steuerkammer 46, die zwischen der schließgliedfernen Stirnseite 47 des Magnetankers 21 und dem halbkugelförmigen Abschluß des Ventildomes 14 gelegen ist. Außerhalb des Leitkörpers 38 geht außerdem von der Ventilkammer 35 ein von einer Abflachung des ansonsten kreisförmigen Querschnitt aufweisenden Ventilstößels 22 gebildeter, zweiter Druckmittelkanal 48 aus. Dieser endet in einer zweiten Steuerkammer 49, die zwischen der schließgliednahen Stirnseite 50 des Magnetankers 21 und dem Polkern 13 des Ventils 10 angeordnet ist. In der gezeichneten Ruhestellung des Ventils 10 besteht eine druckmittelleitende Verbindung der zweiten Steuerkammer 49 einerseits mit dem ersten Druckmittelkanal 45 und andererseits mit der ersten Steuerkammer 46. Diese Verbindung ist durch ein zweites Ventil 51 schaltbar.

Das Ventil 51 ist von einem Ventilsitz 54 am Magnetanker 21 und vom Ventilstößel 22 als Schließkörper gebildet. Der Ventilsitz 54 ist als kegelförmige Ausnehmung gestaltet, welche konzentrisch zur schließgliednahen Mündung des ersten Druckmittelkanals 45 im Magnetanker 21 verläuft. Der Ventilstößel 22 ist für das Zusammenwirken mit dem Ventilsitz 54 magnetankerseitig passend geformt, beispielsweise mit einer kugelförmig gestalteten Stirnseite. Außerdem ist eine zweite Rückstellfeder 55 vorgesehen. Diese ist im Polkern 13 gleichachsig zum Ventilstößel 22 aufgenommen und greift mit Vorspannung am Magnetanker 21 an. Bei nicht erregter Magnetspule 17 ist der Magnetanker 21 durch die Wirkung der zweiten Rückstellfeder 55 mit seiner schließgliedfernen Stirnseite 47 an dem Ventildom 14 abgestützt. In der gezeichneten Ruhestellung des Ventiles 10 liegt der Ventilstößel 22 ebenfalls an einem Anschlag 56 des Ventilgehäuses 11 an. Durch diesen Anschlag 56 ist der Hub des ersten Sitzventils 30 bemessen. Zugleich ist in der Ruhestellung von Magnetanker 21 und Ventilstößel 22 auch der Hub des seine Offenstellung einnehmenden, zweiten Ventils 51 vorgegeben. Dieser Hub ist kleiner als derjenige des ersten Sitzventils 30. Beim Schalten des Ventils 10 in die Arbeitsstellung schließt der durch Erregen der Magnetspule 17 gegen den Polkern 13 bewegte Magnetanker 21 zunächst das zweite Ventil 51, bevor er den Schließhub des ersten Sitzventiles 30 ausführt, und umgekehrt.

Umfangsseitig, d.h. zwischen den beiden Stirnseiten 47 und 50 ist der Magnetanker 21 gegen den Ventildom 14 abgedichtet. Diese Abdichtung kann mittels einer Spalt- oder Labyrinthdichtung erfolgen; sie kann aber auch in der Anordnung eines Dichtringes 57 oder Gleitringes am Magnetanker 21 bestehen, wie dies in Figur 1 gestrichelt angedeutet ist.

Das Ventil 10 ist insbesondere für die Verwendung in schlupfgeregelten hydraulischen Bremsanlagen von Kraftfahrzeugen bestimmt. Es ist in Übereinstimmung mit der in Figur 1 der eingangs erwähnten DE-39 34 771 C1 dargestellten Bremsanlage als Einlaßventil in einer Bremsleitung zwischen einem Hauptbremszylinder und einem Radbremszylinder anzuordnen. Der von der Stufenbohrung 28 gebildete Druckmitteleinlaß steht dann mit dem Hauptbremszylinder, die Querbohrung 34 als Druckmittelauslaß mit dem Radbremszylinder in Verbindung. Das Ventil 10 ist von einer Rückführleitung umgehbar, welche auf der Seite des Radbremszylinders von der Bremsleitung ausgeht und auf der Seite des Hauptbremszylinders wieder in die Bremsleitung einmündet. In der Rückführleitung befinden sich als wesentliche Elemente ein Auslaßventil und in Strömungsrichtung auf dieses folgend eine Rückförderpumpe. Zweckmäßigerweise ist parallel zum Ventil 10 zur Überbrückung des ersten Sitzventiles 30 ein Rückschlagventil 58 zwischen Druckmittelauslaß und Druckmitteleinlaß angeordnet, das bei Druckentlastung des Hauptbremszylinders eine ungedrosselte Rückströmung vom Radbremszylinder zum Hauptbremszylinder ermöglicht.

Die Funktion des Ventiles 10 wird nachfolgend anhand der erwähnten Bremsanlage erläutert:

Bei einer vom Fahrer des Fahrzeugs ausgelösten Bremsung ohne Blockiergefahr nimmt das Ventil 10 seine gezeichnete Ruhestellung ein, d.h. das erste Sitzventil 30 ist geöffnet, ebenso das zweite Ventil 51. Der durch Betätigen des Hauptbremszylinders erzeugte Druck bewirkt durch Verschieben von Druckmittelteilmengen in der Bremsleitung einen Druckanstieg im Radbremszylinder. Wie anhand von Figur 2 erläutert und mittels Pfeilen verdeutlicht wird, tritt das verschobene Druckmittel von der Stufenbohrung 28 kommend in den Ventilsitz 29 ein und verläßt diesen als ersten Teilvolumenstrom unter Umströmung des Schließglieds 14 als hohlkegelförmiger Druckmittelstrahl. Dieser bewirkt in der Ventilteilkammer 43 keinen nennenswerten Staudruck, da diese durch den ersten Druckmittelkanal 45, das offene zweite Ventil 51 und den zweiten Druckmittelkanal 48 mit dem Druckmittelauslaß verbunden ist. Das in die als Stauraum wirkende Ventilteilkammer 43 eingetretene Druckmittel verläßt im wesentlichen unter Umkehrung seiner Strömungsrichtung als zweiten Teilvolumenstrom den Radialspalt 39 und gelangt durch den Axialspalt 40 sowie die Ventilkammer 35 zum Druckmittelauslaß. Bei vom Hauptbremszylinder her erfolgender Druckentlastung nimmt das Druckmittel seinen Weg in umgekehrter Strömungsrichtung durch den Axialspalt 40 und das geöffnete erste Sitzventil 30 in Richtung auf den Hauptbremszylinder sowie durch das parallel zum Ventil 10 angeordnete Rückschlagventil 58.

Bei einer Bremsung mit Blockiergefahr wird das Ventil 10 durch Erregen der Magnetspule 17 in die Arbeitsstellung geschaltet, in welcher durch Verschieben des Magnetankers 21 und des Ventilstößels 22 entgegen der Kraft der Rückstellfedern 31 und 55 das erste Sitzventil 30 und das zweite Ventil 51 in die Schließstellung überführt sind. Dabei sperrt das zweite Ventil 51 die Verbindung zwischen dem ersten Druckmittelkanal 45 und der zweiten Steuerkammer 49, während die Verbindung zwischen dem ersten Druckmittelkanal und der ersten Steuerkammer 46 unbeeinträchtigt bleibt. Gleichzeitig werden das Auslaßventil in der Rückführleitung (siehe Figur 1 in DE 39 34 771 C1) in die Durchlaßstellung geschaltet und die Rückförderpumpe in Betrieb gesetzt. Durch Entnahme von Druckmittelteilmengen aus dem Radbremszylinder und Rückförderung zum Hauptbremszylinder wird radbremsseitig Druck abgebaut und die Blockiergefahr gemindert. In der auf einen Druckabbau folgenden Phase für Druckhalten im Radbremszylinder verbleibt das Ventil 10 in der Arbeitsstellung, während das Auslaßventil in der Rückführleitung in die Schließstellung geschaltet wird.

Für den Druckaufbau im Radbremszylinder verbleibt das Auslaßventil in der Schließstellung, während das Ventil 10 nicht mehr erregt wird. Dies bewirkt ein Verschieben des Magnetankers 21 aufgrund der Wirkung hydraulischer Kräfte und der beiden Rückstellfedern 31 und 55 in Richtung auf die Steuerkammer 46, so daß das Schließglied 24 den Ventilsitz 29 freizugeben beginnt und das erste Sitzventil 30 geöffnet wird, das zweite Ventil 51 jedoch noch geschlossen bleibt. Aufgrund des Druckabbaus im Radbremszylinder herrscht ein Druckgefälle zwischen der Einlaßseite und der Auslaßseite des ersten Sitzventils 30. Der auslaßseitige, niedrigere Druck ist auch durch den zweiten Druckmittelkanal 48 in der zweiten Steuerkammer 49 wirksam. Während der Öffnungsbewegung des Magnetankers 21 wird zusätzlich der vom hauptbremszylinderseitig nachströmenden Druckmittel erzeugte Staudruck in der Ventilteilkammer 43 durch den ersten Druckmittelkanal 45 in der schließgliedfernen Steuerkammer 46 wirksam, nicht jedoch in der zweiten Steuerkammer 49, da das zweite Ventil 51 die Verbindung zwischen dieser und dem ersten Druckmittelkanal geschlossen hält. Das während des überwiegenden Teils des Rückhubs des Magnetankers 21 geschlossene zweite Ventil 51 verhindert somit einen Druckausgleich zwischen der schließgliedfernen, ersten Steuerkammer 46 und der schließgliednahen, zweiten Steuerkammer 49. Der nicht druckausgeglichene Magnetanker 21 unterliegt daher einer den Rückstellfedern 31 und 55 entgegengerichteten Kraft, die den Ventilstößel 22 eine Stellung zwischen der Schließstellung und der Offenstellung des ersten Sitzventils 30 einnehmen läßt. Die hierdurch hervorgerufene Minderung des Durchflußquerschnittes des ersten Sitzventils 30 bewirkt eine Drosselung des Druckmittelstromes mit verlangsamtem Druckanstieg im Radbremszylinder. Bei ausreichendem Druckgefälle regelt das Ventil 10 die Durchflußmenge auf ein weitgehend konstantes Maß, weil ein höherer Differenzdruck einen größeren Staudruck mit daraus resultierender Minderung des Durchflußquerschnitts am ersten Sitzventil 30 und umgekehrt bewirkt. Mit dem Abklingen des Druckgefälles verringert sich auch der Staudruck in der Ventilteilkammer 43. Die Rückstellfedern 31 und 55 führen den Magnetanker 21 in seine Ruhestellung zurück, in welcher das zweite Ventil 51 seine Offenstellung einnimmt. Das Ventil 10 gibt mit am Anschlag 56 abgestütztem Ventilstößel 22 nun seinen vollen Durchflußquerschnitt im ersten Sitzventil 30 für die folgende normale Bremsung frei. Wird jedoch bei gemindertem Durchflußquerschnitt des ersten Sitzventils 30 die Bremsung durch Entlasten des Hauptbremszylinders abgebrochen, so kann das Druckmittel auch unverzögert aus dem Radbremszylinder durch das Rückschlagventil 58 abströmen.

Die Empfindlichkeit des Ventiles 10 in Richtung auf kleinere Druckgefälle ist durch die in Figur 3 dargestellte Variante des ersten Sitzventils 30 mit Leitkörper 38 steigerbar. Bei dieser Ausgestaltung ist der Ventilkörper 27 mit einem gegen den Ventilstößel 22 gerichteten, zapfenförmigen Ansatz 27' versehen. Dieser Ansatz 27' weist den Ventilsitz 29 auf. Der Leitkörper 38 ist über das Schließglied 24 hinaus axial verlängert und umgreift den Ansatz 27' unter Bildung eines zweiten Radialspaltes 39'. Der erste Radialspalt 39 und der Axialspalt 40 sind bei dieser Variante ebenfalls vorhanden .

Der zweite Radialspalt 39' bewirkt eine Steigerung des Staudruckes in der Ventilteilkammer 43 gegenüber der vorbeschriebenen ersten Ausführungsform.

## Patentansprüche

1. Elektromagnetisch betätigtes Ventil (10), insbesondere für schlupfgeregelte hydraulische Bremsanlagen in Kraftfahrzeugen, mit folgenden Merkmalen:
- in einem Ventildom (14) ist ein Magnetanker (21) längsbwegbar aufgenommen,
- der Ventildom (14) ist von einer Magnetspule (17) umgriffen,
- dem Magnetanker (21) ist ein Ventilstößel (22) mit einem ankerabgewandt befestigten Schließglied (24) eines ersten Sitzventils (30) zugeordnet,
- in einem Gehäuse (11) des Ventils (10) ist ein Ventilkörper (27) mit einem Ventilsitz (29) als Druckmitteleinlaß des ersten Sitzventils (30) angeordnet,
- bei nicht erregter Magnetspule (17) ist das Schließglied (24) durch Federkraft einer ersten Rückstellfeder (31) vom Ventilsitz (29) abgehoben,
- das erste Sitzventil (30) befindet sich in einer Ventilkammer (35), welche mit einem Druckmittelauslaß des Ventils (10) in Verbindung steht,
- die Ventilkammer (35) weist eine als Stauraum wirkende Ventilteilkammer (43) auf, von der ein erster Druckmittelkanal (45) zu einer auf der schließgliedfernen Seite des Magnetankers (21) gelegenen ersten Steuerkammer (46) ausgeht,
- von der Ventilkammer (35) geht ein zweiter Druckmittelkanal (48) zu der schließgliednahen Seite des Magnetankers (21) aus,
- ein in der Ventilkammer (43) erzeugter Druck vermag in der ersten Steuerkammer (46) eine entgegen der Kraft der ersten Rückstellfeder (31) auf den Magnetanker (21) wirkende Kraft hervorzurufen, aufgrund der das Sitzventil (30) eine von seiner Ruhestellung abweichende, teilgeschlossene Stellung einnimmt,
gekennzeichnet durch die weiteren Merkmale:
- der Magnetanker (21) begrenzt mit seiner schließgliedfernen Stirnseite (47) die erste Steuerkammer (46) und mit seiner schließgliednahen Stirnseite (50) eine mit dem zweiten Druckmittelkanal (48) in Verbindung stehende zweite Steuerkammer (49),
- es ist ein zweites Ventil (51) zum Schalten einer Verbindung des ersten Druckmittelkanals (45) mit der zweiten Steuerkammer (49) vorgesehen,
- das zweite Ventil (51) gibt in der Ruhestellung des Magnetankers (21) die Verbindung des ersten Druckmittelkanals (45) mit der zweiten Steuerkammer (49) frei, bei aus der Ruhestellung längsverschobenem Magnetanker (21) hält es die Verbindung geschlossen.

2. Ventil nach Anspruch 1, dadurch gekennzeichnet, daß der Magnetanker (21) und der Ventilstößel (22) vom ersten Druckmittelkanal (45) gleichachsig durchdrungene, in der Ruhestellung durch die Kraft einer zweiten Rückstellfeder (55) voneinander getrennte Bauteile sind, von denen zum Bilden des zweiten Ventils (51) das eine einen Ventilsitz (54) hat und das andere als Schließkörper ausgebildet ist.

3. Ventil nach Anspruch 2, dadurch gekennzeichnet, daß der Magnetanker (21) einen zu der ventilstößelseitigen Mündung des ersten Druckmittelkanals (45) konzentrisch angeordneten Ventilsitz (54) aufweist, während die magnetankerseitige Stirnseite des Ventilstößels (22) als angepaßter Schließkörper geformt ist.

4. Ventil nach Anspruch 2, dadurch gekennzeichnet, daß in der Ruhestellung der Ventilstößel (22) unter der Wirkung der ersten Rückstellfeder (31) an einem Anschlag (56) des Ventilgehäuses (11) und der Magnetanker (21) aufgrund der Wirkung der zweiten Rückstellfeder (55) mit seiner schließgliedfernen Stirnseite (47) am Ventildom (14) abgestützt sind.

5. Ventil nach Anspruch 1, dadurch gekennzeichnet, daß der Magnetanker (21) umfangsseitig gegen den Ventildom (14) abgedichtet ist.

6. Ventil nach Anspruch 1, dadurch gekennzeichnet, daß das Schließglied (24) des ersten Sitzventils (30) zumindest ventilsitzseitig kugel- oder kegelförmig ausgestaltet und von einem gleichachsig zum Ventilstößel (22) an diesem angeordneten, hülsenförmigen Leitkörper (38) bis nahe an den Ventilkörper (27) umgriffen ist, derart, daß der vom Ventilsitz (29) ausgehende Druckmittelstrahl in einen Spalt (39) zwischen dem Schließglied (24) und dem Leitkörper (38) eintritt, und daß von diesem Spalt (39) ein gegen die Ventilkammer (35) abgeschirmte, druckmittelleitende Verbindung zum ersten Druckmittelkanal (45) ausgeht.

7. Ventil nach Anspruch 6, dadurch gekennzeichnet, daß der Ventilsitz (29) des ersten Sitzventils (30) in einem zapfenförmigen Ansatz (27') des Ventilkörpers (27) angeordnet und dieser Ansatz (27') von dem Leitkörper (38) des Ventilstößels (22) umfangsseitig übergriffen ist.

## Claims

1. Electromagnetically actuated valve (10), in particular for slip-controlled hydraulic brake systems in motor vehicles, with the following features:
- a magnet armature (21) is accommodated so that it can be moved longitudinally in a valve dome (14),
- the valve dome (14) is surrounded by a magnet coil (17),
- a valve push-rod (22) with a closing element (24), of a first seat valve (30), fastened to it remote from the magnet armature (21) is associated with the armature,
- a valve body (27) with a valve seat (29) as the pressure medium inlet for the first seat valve (30) is arranged in a housing (11) of the valve (10),
- when the magnet coil (17) is not excited, the closing element (24) is raised by a spring force of a first return spring (31) from the valve seat (29),
- the first seat valve (30) is located in a valve chamber (35) which is in connection with a pressure medium outlet of the valve (10),
- the valve chamber (35) has a partial valve chamber (43), acting as a ram pressure space, from which partial valve chamber (43) a first pressure medium passage (45) emerges to a first control chamber (46) located at the end, of the magnet armature (21) remote from the closing element,
- a second pressure medium passage (48) emerges from the valve chamber (35) to the end of the magnet armature (21) near to the closing element,
- a pressure generated in the valve chamber (43) can cause in the first control chamber (46) a force acting on the magnet armature (21) against the force of the first return spring (31) and, because of this force, the seat valve (30) takes up a partially closed position deviating from its rest position,
characterized by the further features:
- the end surface (47), remote from the closing element, of the magnet armature (21) bounds the first control chamber (46) and the end surface (50), near the closing element, of the magnet armature (21) bounds a second control chamber (49) which is in connection with the second pressure medium passage (48),
- a second valve (51) is provided for switching on and off a connection between the first pressure medium passage (45) and the second control chamber (49),
- in the rest position of the magnet armature (21), the second valve (51) frees the connection between the first pressure medium passage (45) and the second control chamber (49) and, when the magnet armature (21) is displaced longitudinally out of the rest position, this second valve (51) keeps the connection closed.

2. Valve according to Claim 1, characterized in thatthe magnet armature (21) and the valve push-rod (22) are components which are separated from one another, which are penetrated on the same axis by the first pressure medium passage (45), which are held in the rest position by the force of a second return spring (55) and of which components, in order to form the second valve (51), one has a valve seat (54) and the other is configured as a closing body.

3. Valve according to Claim 2, characterized in thatthe magnet armature (21) has a valve seat (54) concentrically arranged relative to the opening of the first pressure medium passage (45) at the valve push-rod end, whereas the end surface of the valve push-rod (22) at the magnet armature end is formed as the matched closing body.

4. Valve according to Claim 2, wherein, in the rest position, the valve push-rod (22) is supported on a stop (56) of the valve housing (11) under the action of the first return spring (31) and the end surface (47), remote from the closing element, of the magnet armature (21) is supported on the valve dome (14) because of the action of the second return spring (55).

5. Valve according to Claim 1, characterized in thatthe magnet armature (21) is sealed at the periphery against the valve dome (14).

6. Valve according to Claim 1, characterized in that the closing element (24) of the first seat valve (30) has a spherical or conical design at least at the valve seat end and is surrounded to near the valve body (27) by a sleeve-shaped guide body (38) arranged on the valve push-rod (22) and on the same his as the latter, in such a way that the pressure medium jet emerging from the valve seat (29) enters a gap (39) between the closing element (24) and the guide body (38) and that a connection, to the first pressure medium passage (45), carrying pressure medium and screened from the valve chamber (35) emerges from this gap (39).

7. Valve according to Claim 6, characterized in thatthe valve seat (29) of the first seat valve (30) is arranged in a spigot-shaped projection (27') of the valve body (27) and this projection (27') is surrounded peripherally by the guide body (38) of the valve push-rod (22).

## Revendications

1. Vanne (10) actionnée de façon électromagnétique, en particulier pour des systèmes de freinage hydrauliques à antipatinage dans des véhicules à moteur, avec les particularités suivantes :
- un induit magnétique (21) est logé de façon à pouvoir coulisser dans le sens de la longueur dans un dôme de vanne (14),
- le dôme de vanne (14) est entouré par une bobine d'électroaimant (17),
- un poussoir de vanne (22) avec un organe d'obturation (24), fixé à l'opposé de l'induit d'une première vanne à siège (30) est associé à l'induit (21),
- dans un boîtier (11) de la vanne (10) on dispose un corps de vanne (27) avec un siège de vanne (29) en tant qu'orifice d'entrée du fluide sous pression pour la première vanne à siège (30),
- quand la bobine de l'électroaimant (17) n'est pas excitée l'organe d'obturation (24) est soulevé du siège de vanne (29 par la force d'un premier ressort de rappel (31),
- la première vanne à siège (30) se trouve dans une chambre de vanne (35) qui est en liaison avec un orifice de sortie du fluide sous pression de la vanne (10),
- la chambre de vanne (35) présente une chambre partielle de vanne (43) qui agit comme une chambre d'accumulation, d'où part un premier canal (45) de fluide sous pression vers une première chambre de commande (46) placée du côté de l'induit (21) éloigné de l'organe d'obturation,
- un second canal (48) de fluide sous pression va de la chambre de vanne (35) au côté de l'induit (21) qui est proche de l'organe d'obturation,
- une pression produite dans la chambre de vanne (43) a la possibilité de créer dans la première chambre de commande (46) une force qui agit à l'encontre de la force du premier ressort de rappel (31) sur l'induit (21), à la suite de laquelle la vanne à siège (30) prend une position partiellement fermée qui l'écarte de sa position de repos,
caractérisée en ce que
- l'induit (21) délimite par sa face frontale (47), éloignée de l'organe d'obturation, la première chambre de commande (46) et par sa face frontale (50), proche de l'organe d'obturation, une deuxième chambre de commande (49) qui est en liaison avec le second canal (48) de fluide sous pression,
- il est prévu une deuxième vanne (51) pour brancher une liaison du premier canal (45) de fluide sous pression avec la deuxième chambre de commande (49),
- la deuxième vanne (51) libère quand l'induit (21) est en position de repos, la liaison du premier canal (45) de fluide sous pression avec la seconde chambre de commande (49, en maintenant la liaison quand l'induit (21) coulisse dans le sens de la longueur à partir de sa position de repos.

2. Vanne selon la revendication 1,
caractérisée en ce que
l'induit (21) et le poussoir de vanne (22) sont des pièces constitutives qui sont percées avec le même axe par le premier canal (45) de fluide sous pression et sont séparées l'une de l'autre en position de repos par la force d'un second ressort de rappel (55), l'une de ces pièces constitutives ayant un siège de vanne (54) pour former la seconde vanne (51) et l'autre pièce constitutive étant constituée comme un organe d'obturation.

3. Vanne selon la revendication 2,
caractérisée en ce que
l'induit (21) présente un siège de vanne (54) qui est disposé concentriquement à l'embouchure, située du côté du poussoir de vanne, du premier canal (45) de fluide sous pression, tandis que la face frontale, située du côté de l'induit, du poussoir de vanne (22) a la forme d'un organe d'obturation ajusté.

4. Vanne selon la revendication 2,
caractérisée en ce que
en position de repos, sous l'action du premier ressort de rappel (31) le poussoir de vanne (22) prend appui sur une butée (56) du boîtier de vanne (11) et l'induit (21) du fait de l'action du second ressort de rappel (55) prend appui par sa face frontale (47), éloignée de l'organe d'obturation, sur le dôme de vanne (14).

5. Vanne selon la revendication 1,
caractérisée en ce que
on assure l'étanchéité de l'induit (21) sur le pourtour par rapport au dôme de vanne (14).

6. Vanne selon la revendication 1,
caractérisée en ce que
l'organe d'obturation (24) de la première vanne à siège (30) est constituée au moins du côté du siège de vanne en forme de bille ou de cône et est entouré par un corps de guidage (38), en forme de manchon, disposé avec le même axe par rapport au poussoir de vanne (22) sur celui-ci, jusqu'à proximité du corps de vanne (27), d'une manière telle que le jet de fluide sous pression qui sort du siège de vanne (29) entre dans une fente (39), située entre l'organe d'obturation (24) et le corps de guidage (38) et qu'une liaison, protégée de la chambre de vanne (35), faisant passer du fluide sous pression, aille de cette fente (39) au premier canal de fluide sous pression (45).

7. Vanne selon la revendication 6,
caractérisée en ce que
le siège de vanne (29) de la première vanne à siège (30) est disposé dans un appendice (27'), en forme de tenon, du corps de vanne (27) et cet appendice (27') est tenu sur son pourtour par le corps de guidage (38) du poussoir de vanne (22).
